# EUROPEAN PATENT SPECIFICATION

(11) **EP 3 178 201 B1**
(45) Date of publication and mention of the grant of the patent: **13.03.2019**
(21) Application number: 15830609.2
(22) Date of filing: 22.07.2015
(51) Int. Cl.: H04L 12/24, H04L 12/26

(54) **METHODS, SYSTEMS, AND COMPUTER READABLE MEDIA FOR PROVIDING USER INTERFACES FOR SPECIFICATION OF SYSTEM UNDER TEST (SUT) AND NETWORK TAP TOPOLOGY AND FOR PRESENTING TOPOLOGY SPECIFIC TEST RESULTS**
VERFAHREN, SYSTEME UND COMPUTERLESBARE MEDIEN ZUR BEREITSTELLUNG VON BENUTZERSCHNITTSTELLEN ZUR SPEZIFIKATION EINES SYSTEM-UNDER-TEST (SUT) UND NETZWERKANSCHLUSSTOPOLOGIE UND ZUR DARSTELLUNG TOPOLOGIESPEZIFISCHER TESTERGEBNISSE
PROCÉDÉS, SYSTÈMES, ET SUPPORTS LISIBLES PAR ORDINATEUR POUR RÉALISER DES INTERFACES D'UTILISATEUR POUR LA SPÉCIFICATION D'UN SYSTÈME EN COURS DE TEST (SUT) ET D'UNE TOPOLOGIE DE PRISES DE RÉSEAU ET POUR PRÉSENTER DES RÉSULTATS DE TEST SPÉCIFIQUES À LA TOPOLOGIE

(30) Priority: 05.08.2014 US 201414452205
(43) Date of publication of application: 14.06.2017
(73) Proprietor: Keysight Technologies Singapore (Sales) Pte. Ltd., Singapore 768923 (SG)
(72) Inventor: GINTIS, Noah, Steven, Westlake Village, CA 91361 (US)
(74) Representative: Murgitroyd & Company
(86) International application number: PCT/US2015/041633
(87) International publication number: WO 2016/022297

(56) References cited:
- US-A1- 2003 097 438
- US-A1- 2010 074 141
- US-A1- 2010 074 141
- US-A1- 2012 151 596
- US-A1- 2013 159 865
- US-A1- 2013 159 865
- US-A1- 2013 305 091
- US-A1- 2013 305 091
- US-A1- 2014 115 421

## Description

### TECHNICAL FIELD

The subject matter described herein relates to testing network equipment. More particularly, the subject matter described herein relates to methods, systems, and computer readable media for providing user interfaces for specification of system under test (SUT) and network tap topology and for presenting topology specific test results.

### BACKGROUND

In network lab testing environments, network equipment test devices are connected to single or multiple devices under test (DUTs). A network that includes multiple DUTs is often referred to as a system under test (SUT). In some tests, the network equipment test devices send packets to the DUTs, receive packet from the DUTs, and generate statistics based on the received packets.

Currently, network equipment test devices allow topology information to be specified about the network equipment test devices themselves. However, the SUT is treated as a black box by current network equipment test devices. That is, current network equipment test devices do not allow the specification of topology information associated with the SUT. Accordingly, the test administrator is required to manually interpret received packets statistics to identify configuration errors associated with the SUT. In
light of the voluminous nature of network test data, such manual interpretation is undesirable.

In addition to specifying the topology of the SUT, it is desirable for the user to be able to define tap points which may be the DUTs themselves or links between the DUTs. Network taps are devices that either passively copy or generate measurements based on packets transmitted through a network while allowing the original packets to proceed to their destinations. In order to properly configure a test, taps must be configured to measure or copy only traffic that is of interest to the user for a specific test. Performing such configuration manually can be cumbersome, especially when the number of taps is large. In addition, if a large number of taps are used in a particular test, a large number of packets will be measured or copied and analysis of measurements from multiple different sources may be difficult. Accordingly, there exists a need for methods, systems, and computer readable media for providing user interfaces for specification of SUT and network tap topology and for presenting topology specific test results.

The US patent application publication US 2013/0305091 discloses a method and an apparatus for editing test configurations. The method includes displaying a graphical representation of a test configuration to be tested by a test system on a user interface and receiving user input identifying network topology to be added to the test configuration, the network topology including a device group defined by a number of emulated traffic sources, a set of protocols and a number of ports.

The US patent application publication US 2013/0159865 discloses a network topology which is displayed in a graphical user interface on a display of a computer. The network topology includes graphical representations of multiple network devices, of internal interfaces within the multiple network devices, and of network connections between the multiple network devices.

A network equipment test device provides a user interface for user specification of a test traffic source, a test traffic destination, SUT and waypoint topology and one or more test cases. In response to receiving the specified input from the user via the interface, the test traffic source is automatically configured to send the test traffic to the destination via the SUT. The waypoint is automatically configured to measure the test traffic. When the test is initiated, test traffic is sent from the test traffic source to the test traffic destination via the
SUT and the at least one waypoint. Test traffic is measured at the waypoint, and traffic measurement results are displayed on a visual map of SUT topology.

The subject matter described herein can be implemented in software in combination with hardware and/or firmware. For example, the subject matter described herein can be implemented in software executed by a processor. In one exemplary implementation, the subject matter described herein can be implemented using a non-transitory computer readable medium having stored thereon computer executable instructions that when executed by the processor of a computer control the computer to perform
steps. Exemplary computer readable media suitable for implementing the subject matter described herein include non-transitory computer-readable media, such as disk memory devices, chip memory devices, programmable logic devices, and application specific integrated circuits. In addition, a computer readable medium that implements the subject matter described herein may be located on a single device or computing platform or may be distributed across multiple devices or computing platforms.

### BRIEF DESCRIPTION OF THE DRAWINGS

The subject matter described herein will now be explained with reference to the accompanying drawings of which:
Figure 1 is a block diagram illustrating a lab test environment where two network equipment test devices are configured to test one or more DUTs according to an embodiment of the subject matter described herein;
Figure 2 is a block diagram illustrating exemplary specification of SUT topology information that may be performed by one or both of the network equipment test devices in Figure 1;
Figure 3A is a block diagram illustrating exemplary specification of source and destination information by a network equipment test device;
Figure 3B is block diagram illustrating specification of a path through DUTs using SUT topology information according to an embodiment of the subject matter described herein;
Figure 4 is a table illustrating exemplary SUT-topology-specific test results that may be generated by a network equipment test device according to an embodiment of the subject matter described herein;
Figure 5 is a flow chart illustrating an exemplary process for specifying or autodiscovering and utilizing SUT topology information according to an embodiment of the subject matter described herein;
Figures 6A-6C are computer screen shots of an exemplary user interface for specifying traffic source and destination information associated with a network equipment test;
Figures 7A-7G are computer screen shots of the user interface illustrated in Figures 6A-6C for specifying topology information of network taps and the system under test according to an embodiment of the subject matter described herein;
Figure 8A-8C are computer screen shots of the interface illustrated in Figures 6A-6C where measurements from the test are mapped to different portions of a displayed topology map of the system under test according to an embodiment of the subject matter described herein; and
Figure 9 is a flow chart illustrating an exemplary process for providing user interfaces for specification of system under test and network tap topology and for presenting topology specific test results according to an embodiment of the subject matter described herein.

### DETAILED DESCRIPTION

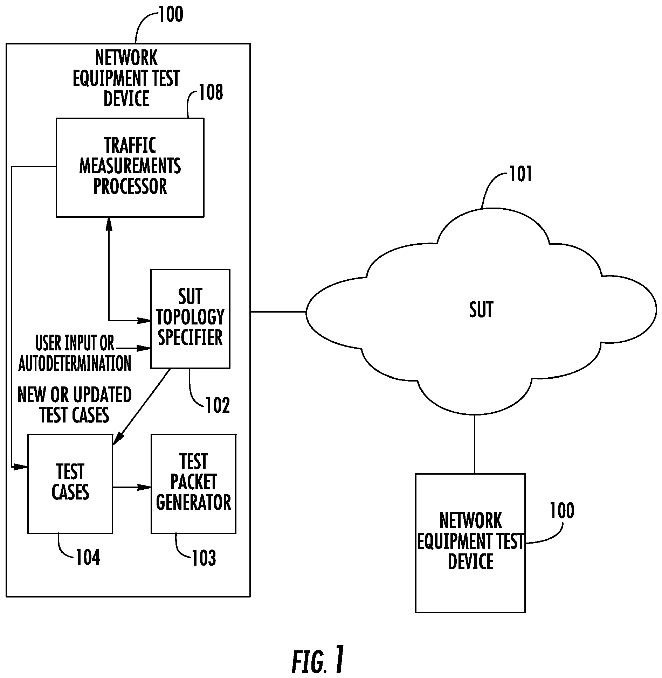

The subject matter described herein relates to methods, systems, and computer readable media for providing user interfaces for specification of SUT and network tap topology and for presenting topology specific test results. Figure 1 is a block diagram illustrating an exemplary lab test environment where network equipment test devices are configured to test one or more DUTs that form a SUT. Referring to Figure 1, network equipment test devices **100** may be configured as source and destination, respectively, to test one or more DUTs that form a SUT **101.** In the illustrated example, SUT **101** appears as a cloud, which is the way that DUTs are currently visualized on the graphical user interfaces of network equipment test devices **100.** Because topology information associated with SUT **101** may be important in visualizing test results, analyzing test results, and configuring subsequent tests, each network equipment test device **100** may include a SUT topology specifier **102** that allows the user to specify SUT topology information and/or automatically discovers SUT topology information. For example, a user may input data regarding the configuration of SUT **101.** SUT topology specifier **102** may store this information. In an alternate implementation, SUT topology specifier **102** may automatically discover SUT topology information, for example, by sending topology discovery packets, such as packet Internet groper (PING), address resolution protocol (ARP), or simple network management protocol (SNMP) packets to SUT **101** to determine topology information associated with SUT **101.** In yet another alternate implementation, SUT topology specifier **102** may receive user input regarding SUT topology, use autodiscovery to determine the actual topology, compare the actual topology to the user input topology, and report results of the comparison to the user. For example, SUT topology specifier **102** may report graphically any differences between the user input topology and the autodiscovered topology.

Once SUT topology information has been specified, either through user input or autodiscovery and the user starts a test, a test packet generator **103** generates and sends test packets to SUT **101** based on test cases **104.** Because SUT topology information has been specified, when packets or corresponding traffic measurements are received by traffic measurements processor **108,** the topology information can be used to generate SUT-topology-specific test results. Examples of SUT topology-specific test results include DUT coverage by a test, link coverage by a test, and packet statistics on a per link and/or per DUT basis. The SUT-topology-specific test results may also be used to generate new test cases and/or reconfigure existing test cases. For example, if a test indicates that a particular DUT in the SUT topology fails to forward packets, additional test cases may be created for this DUT.

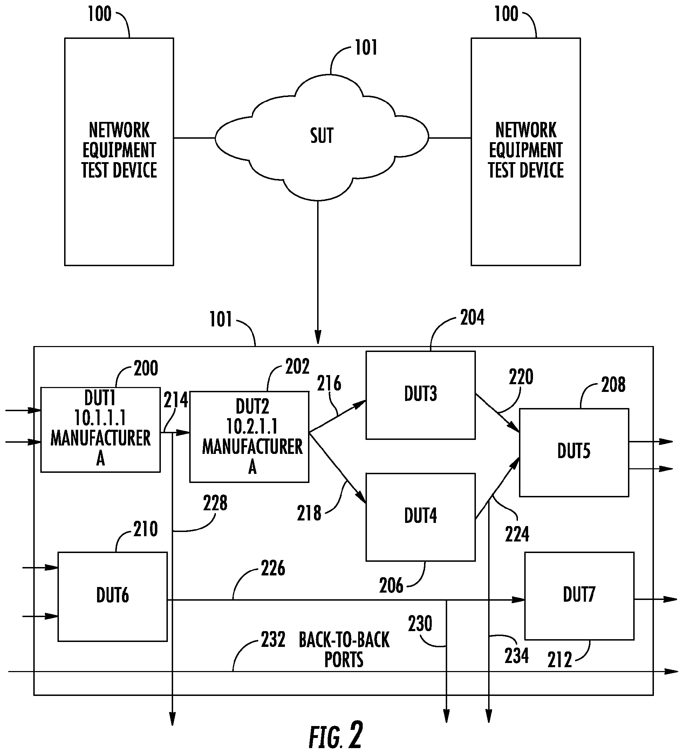

Figure 2 is an example of SUT topology information that may be specified for the cloud illustrated in Figure 1. Referring to Figure 2, SUT cloud **101** may be editable by the user via a graphical user interface provided by SUT topology specifier **102.** Thus, Figure 2 is an example of a graphical user interface that SUT topology specifier **102** may present to the user. SUT cloud **101** may be a selectable and editable graphical user interface element. When the user selects SUT cloud **101,** SUT topology specifier **102** may allow the user to define DUTs and interconnections between DUTs. In the illustrated example, the use has defined devices under test **200, 202, 204, 206, 208, 210,** and **212.** The user is also enabled to input interconnections **214, 216, 218, 220, 224,** and **226** between the DUTs. The user is further enabled to specify the location of tap points **228, 230,** and **234** that represent packet capture or measurement points between the DUTs. The user is further enabled to specify back to back ports **232**, which are ports of network equipment test devices **100** that are connected to each other. Back to back ports may be used to verify the functionality of network equipment test devices **100.** The user is further enabled to specify names associated with each device under test, i.e., "DUT1". The user is further enabled to specify IP address information and manufacturers associated with the DUTs. In the illustrated example, the user has defined two of the DUTs as Manufacturer A DUTs and has specified IP addresses for the Manufacturer A DUTs.

As described above, once DUT topology information is specified, the DUT topology information can be used to visualize and/or analyze test results. For example, test packet generator **103** may transmit test packets to a device under test. Traffic measurements processor **108** may receive packets or corresponding traffic measurements from the system under test and/or waypoints defined in the system under test and determine, using the stored topology information, which links between the devices under test were covered by the test. Traffic measurements processor **108** may generate a diagram, similar to that illustrated in Figure 2 that shows visually, which links were traversed by the test packets. Traffic measurements processor **108** may highlight any links or DUTs that are not traversed in a test for subsequent testing.

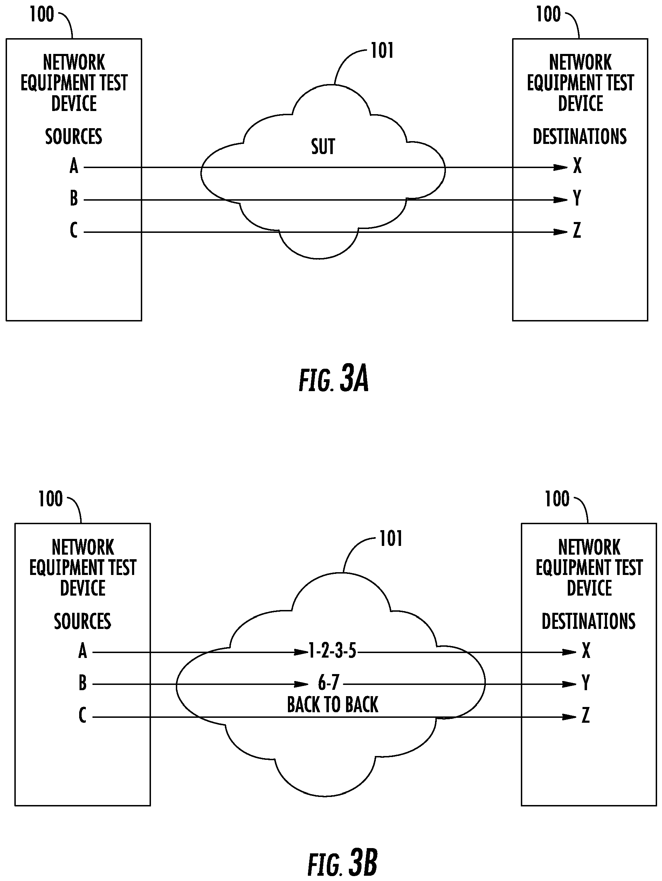

In another example, as illustrated in Figures 3A and 3B, SUT topology specifier **102** may provide for user specification of the path through a network of devices under test through which packets will travel during a test and may store the associated test case in memory of network equipment test device **100.** For example, Figure 3A illustrates the conventional specification of packet destinations without specifying a path through the devices under test. However, once system under test topology information is known, the test administrator can specify, using the system under test topology information, a path through the system under test. In Figure 3B, packets from source A to destination X will pass through devices under test 1-5. Packets from source B to destination Y will traverse devices under test 6 and 7. Packets from source C to destination Z will be transmitted over a back to back connection. SUT topology specifier **102** may provide a test case edit mode where the user graphically defines the paths of packets through a network of devices under test, using an interface similar to that illustrated in Figure 3B. Once the user defines the paths through the system under test, SUT topology specifier **102** may create and store the corresponding test case for later execution by network equipment test device **100.**

It should be noted that network equipment test device **100** and its components and functionality described herein constitute a special purpose test device that improves the technological field of testing network devices by providing for user specification of SUT and tap topology, automatic configuration of taps to detect traffic of interest, and display of SUT-topology-specific test results.

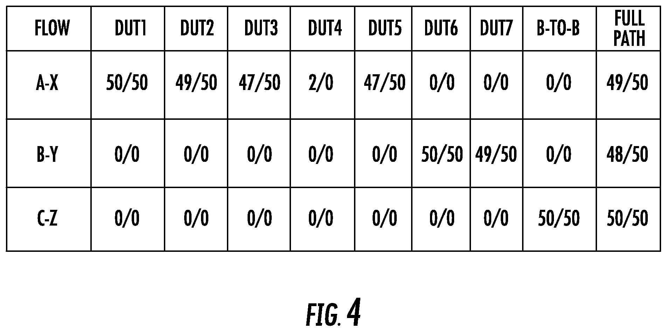

As stated above, traffic measurements processor **108** may utilize the SUT topology information to generate SUT-topology-specific test results. Figure 4 is a table illustrating an example of SUT-topology-specific test results that may be generated by traffic measurements processor **108** using the SUT topology information. Referring to Figure 4, the table indicates that for a flow from source A to destination X, the number of packets received and the number of packets expected at different points in the device under test topology. For example at DUT 1, 50 packets were received and 50 packets were expected. For the same flow, at DUT 2, 49 packets were received and 50 were expected, indicating that one packet was lost before DUT 2. At DUT 3, 47 packets were received and 50 were expected, indicating a loss of 3 packets before DUT 3. At DUT 4, two packets were expected and zero packets were received, indicating a loss of two packets before DUT 4. For the full path, 49 packets were received and 50 were transmitted, indicating one packet lost for the entire test. For the A-X packet flow, it can be seen from the table illustrated in Figure 4 that only one packet did not make it completely through the test. However, the topology information allows the user to determine that a certain number of packets did not proceed along their expected paths through the network of devices under test. As will be described in more detail below, measurements, such as latency and packet loss, may be presented on a per-DUT or per-link basis.

Returning to Figure 3B, for the B-Y flow, packets are only expected to traverse DUTs 6 and 7. In the topology illustrated in in Figure 2, the path from the source network equipment test device **100** to the destination network equipment test device **100** through DUTs 6 and 7 does not traverse any other DUTs. Thus, in Figure 4, for the B-Y flow, the expected packets at DUTs 1-5 are all zero, as all of the packets should traverse DUTs 6 and 7 only. Similarly, for the C-Z flow, the packets are expected to only traverse the back to back connection between network equipment test devices **100,** the expected packets at each DUT are zero in the table illustrated in Figure 4. The actual number of packets that traverse the back to back connection is equal to the expected number of packets, indicating that the back to back connection works correctly for the particular flow used in the test.

In another example of SUT-topology-specific test results, traffic measurements processor **108** may generate latency graphs as a function of location in the SUT topology. For example, a latency graph may be generated showing the average latency on each link **214, 216, 218, 220, 224,** and **226** illustrated in Figure 2.

As stated above, the SUT-topology-specific test results may be used to generate new test cases or update existing test cases. Such generation may be performed dynamically by traffic measurements processor **108** during a test or statically by a test administrator using the interface provided by SUT topology specifier **102** after viewing SUT-topology-specific test results. In the automated case, traffic measurements processor **108** may determine that a particular test is not covering all of the DUTs in the topology and may modify the test during execution of the test to send packets to the DUT that was initially not covered by the test. Such a modification may also be performed manually by the test administrator after viewing test results. In another example, if the test results indicate that a particular device under test is causing packet loss for packets over a certain size, traffic measurements processor **108** may reduce the packet size of packets sent to the DUT until the packets pass the DUT.

In another example, if the SUT-topology-specific test results indicate that all packets are being transmitted over one link but no packets are being transmitted over another link through which packets are expected to be transmitted, it may be desirable to review the cabling between the network equipment test devices and the devices under test to determine whether a cable misconfiguration has occurred before running subsequent tests.

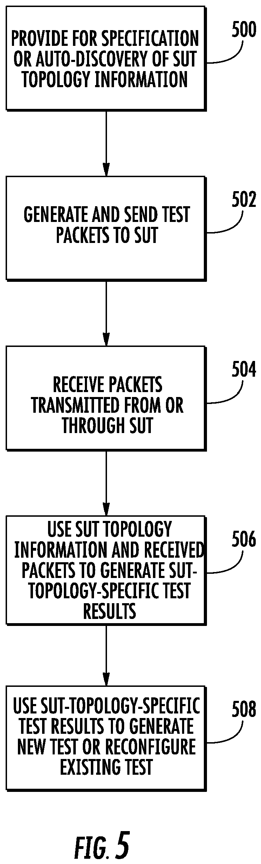

Figure 5 is a flow chart illustrating exemplary overall steps for specifying and utilizing device under test topology information according to an embodiment of the subject matter described herein. Referring to Figure 5, in step **500,** the method includes providing for the specification or autodiscovery of SUT topology information. As stated above, providing for the specification of SUT topology information may include allowing the user to input DUT topology information via a graphical user interface, similar to that illustrated in Figure 2. Automatically discovering device under test topology information may include generating and sending topology discovery messages, such as ARP, SNMP, or PING messages, to the DUTs. In step **502,** test packets are transmitted to the system under test. The test packets may be part of a device under test link coverage test, an MTU size test, or any suitable test. Because SUT topology information is known, transmitting the test packets may include specifying, on a per packet flow basis, a path through the DUTS, as illustrated in Figure 3B.

In step **504,** packets are received from the system under test. The packets may be packets that were transmitted by or through the devices under test. In step **506,** the method includes generating SUT-topology-specific information from the test results. An example of such information is illustrated in Figure 4. In step **508,** the SUT-topology-specific test results are used to reconfigure a test or to generate a new test. For example, if the test results indicate lack of coverage on a particular inter-DUT link, a subsequent test may be structured to test that link. In another example, if packet loss is occurring at a particular device under test, additional testing directed to that device under test may be generated.

Although in the examples above, packets are described as being received from the DUTs, it is understood that packets transmitted from or through the DUTs could be collected by network taps, such as the network taps illustrated in Figure 2, and provided by the taps to the network equipment test device or to memory accessible to the network equipment test device. In one embodiment, the network taps may be one or more network tool optimizer devices with at least one network port that receives packets transmitted from or through the devices under test and at least one tool port that forwards the packets to the network equipment test device. In addition, although the SUT topology specifier is shown as being a component of the network equipment test device, it is understood that the SUT topology specifier **102** may reside in whole or in part on an administrative terminal that has access to the network equipment test device to configure its test cases and/or interpret test results.

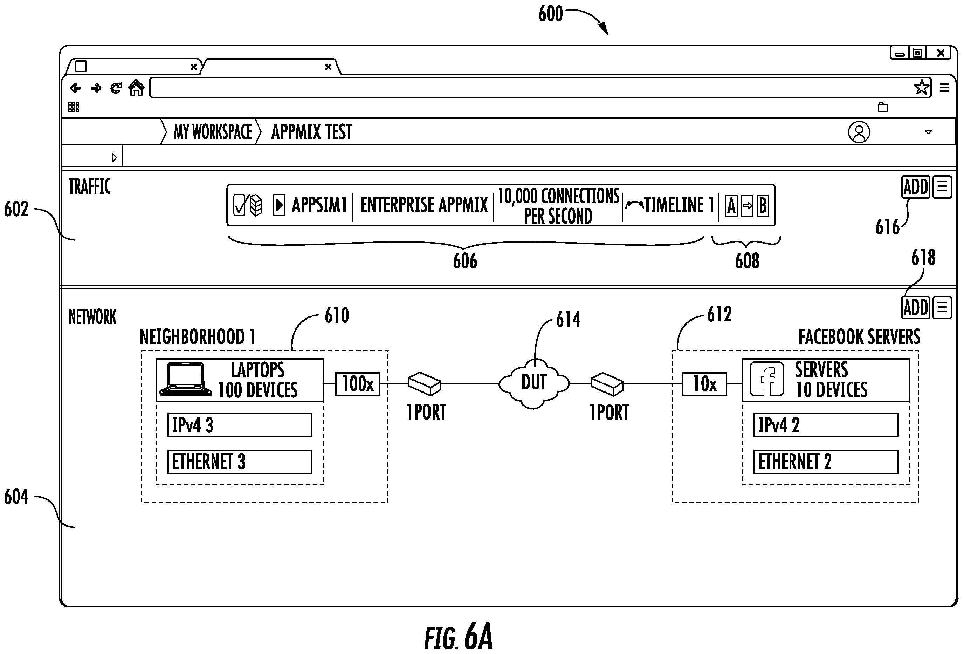

Figures 6A-6C illustrate a user interface that may be presented by SUT topology specifier **102** for defining a traffic source and a traffic destination according to an embodiment of the subject matter described herein. Referring to Figure 6A, the user interface **600** includes a traffic definition portion **602** and a control plane definition and display portion **604.** Traffic definition portion **602** provides for user specification of a type of traffic, a traffic volume, and a timeline for the traffic. In the illustrated example, the user has selected traffic to be generated a mix of simulated enterprise applications. With regard to traffic rate, traffic definition portion **602** provides for user specification of a number of connections per second to be initiated with or through the SUT. With regard to timeline, traffic definition portion **602** provides for user specification of a profile for ramping traffic up to the specified number of connectors per second, a time for maintaining the specified number of connections per second, and a time for ramping the specified number of connections per second down as the test concludes.

Traffic definition portion **602** further includes an interface where the user can specify a traffic source and a traffic destination, as well as intermediate points between the traffic source and the destination. In the illustrated example, A is referred to as the traffic source, and B is the traffic destination. Intermediate points are not shown in Figure 6A because there are no devices under test shown. Traffic definition portion **602** may also provide for user specification of waypoints where traffic is measured. In Figure 6A, the user can add different traffic types via an add button **616.** Similarly, a user can add nodes to the network topology via add button **618.**

Control plane definition and display portion **604** displays network endpoints **610** and **612** and system under test **614.** In the illustrated example, the network endpoints include 100 laptops running IPv4 over Ethernet and 10 Facebook servers running IPv4 over Ethernet. The topology of system under test **614** is not specified in Figure 6A.

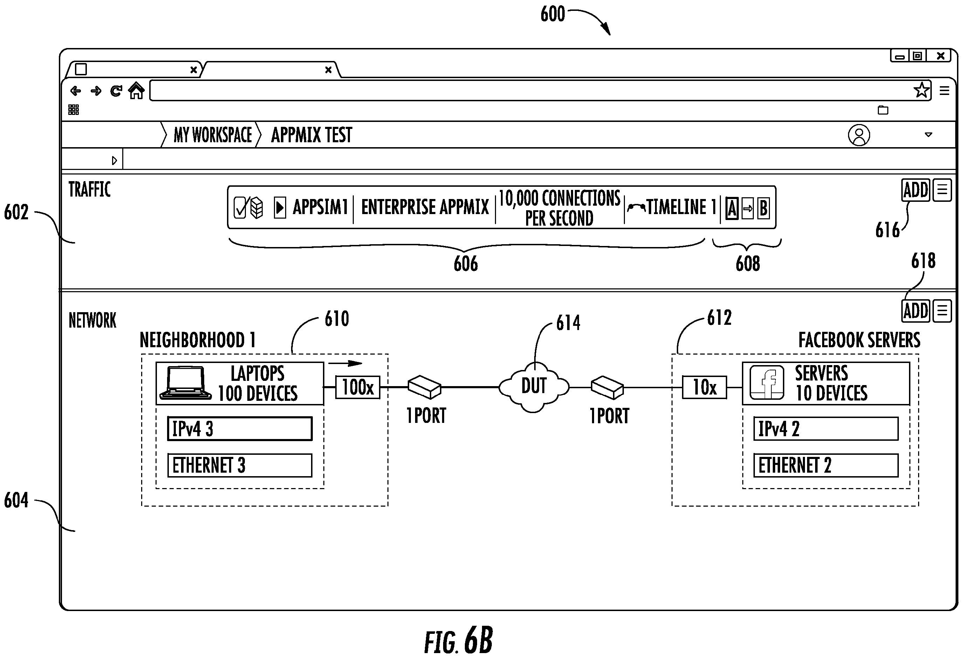

Figure 6B illustrates how interface **600** provides for user selection of a traffic source. In Figure 6B, the user selects "A" in traffic definition portion **602** and then selects the corresponding node for the traffic source in control plane definition and display portion **604.** In the illustrated example, the user selects laptops **610** as the traffic source or "A" nodes.

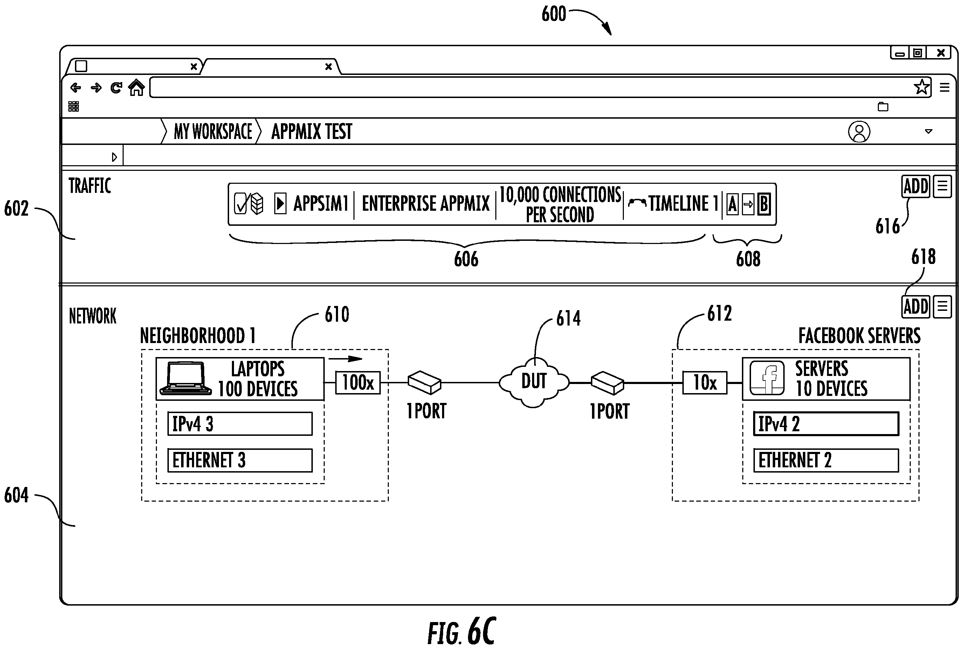

Figure 6C illustrates providing for user specification of the traffic destination. In the illustrated example, the user selects "B" in traffic definition portion **602** and then selects the node in control plane definition and display portion **604** for the traffic destination. In the illustrated example, the user selects Facebook servers **612** as the traffic destination.

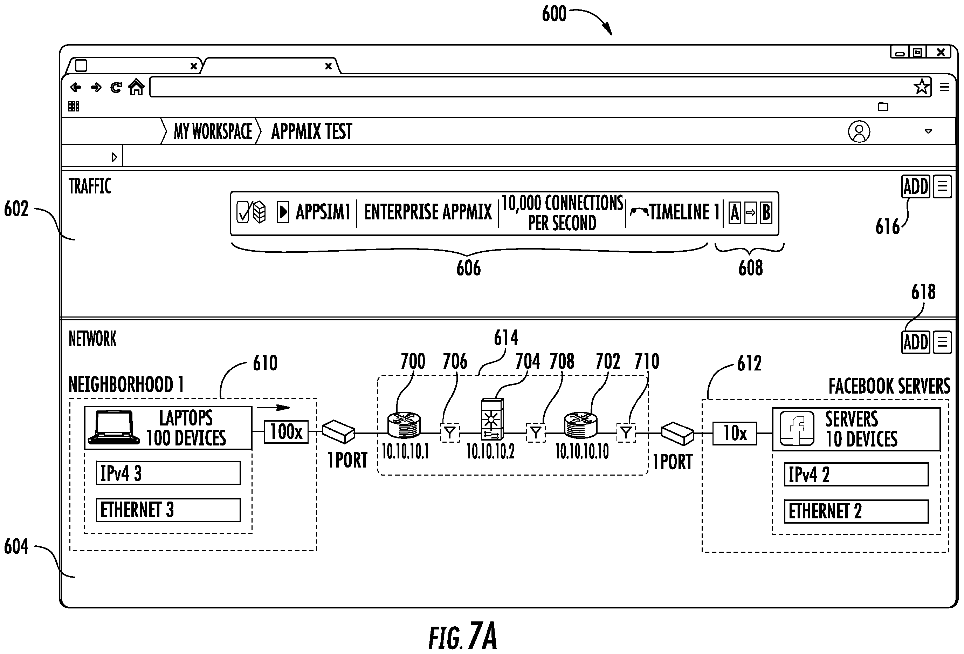

Figures 7A illustrates an example of how SUT topology specifier **102** may provide for user specification of the system under test and tap topology according to an embodiment of the subject matter described herein. In the illustrated example, the user defines SUT **614** to include routers **700, 702,** and **704** and network taps **706, 708,** and **710.** The user nodes and waypoints or tap points to the system under test using add button **618.** The user may also specify the interconnections between the devices under test using add button **618** to add the interconnections and then graphically connect the devices under test using the added interconnections.

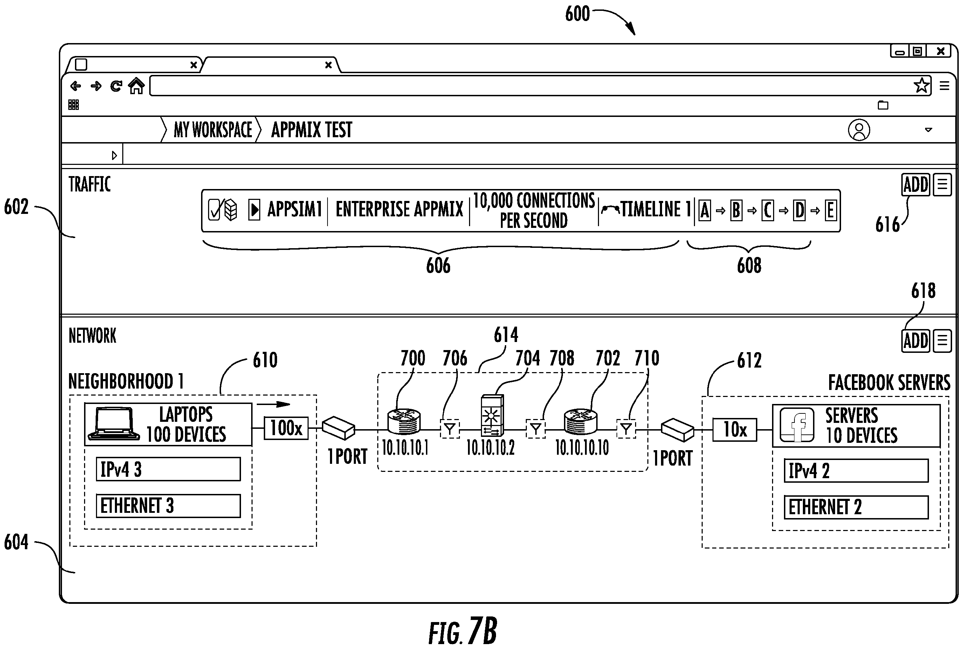

Once the user has specified the topology network using control plane definition and display potion **604,** the user can define which nodes are traffic sources, which nodes are traffic destinations, as well as the locations of the waypoints. In Figure 7B, traffic definition portion **602** displays A, B, C, D, and E nodes corresponding to the number of nodes displayed in control plane definition and display portion **604.** In the illustrated example, traffic definition portion **602** displays five nodes corresponding to nodes **610** and **612** and tap points **706, 708,** and **710.** The displayed A. B, C, D, and E nodes can then be associated with the corresponding nodes displayed in control plane definition and display portion **604.**

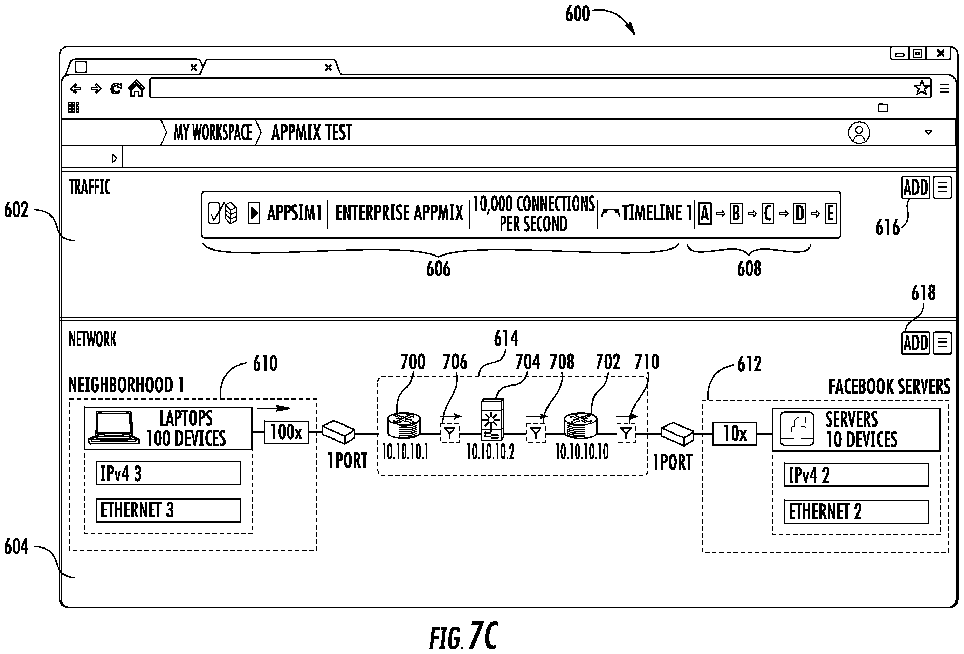

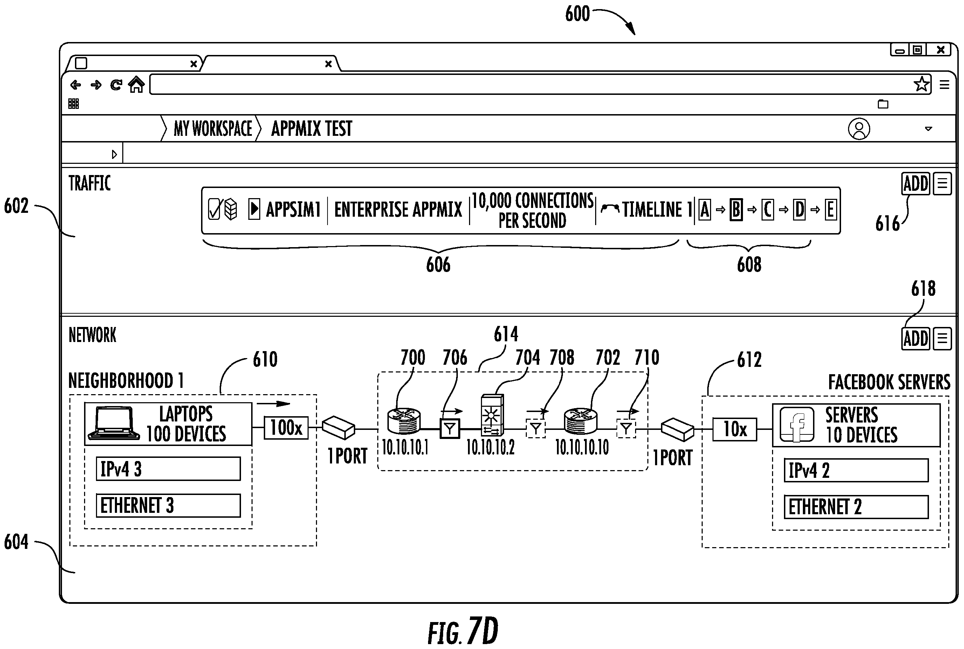

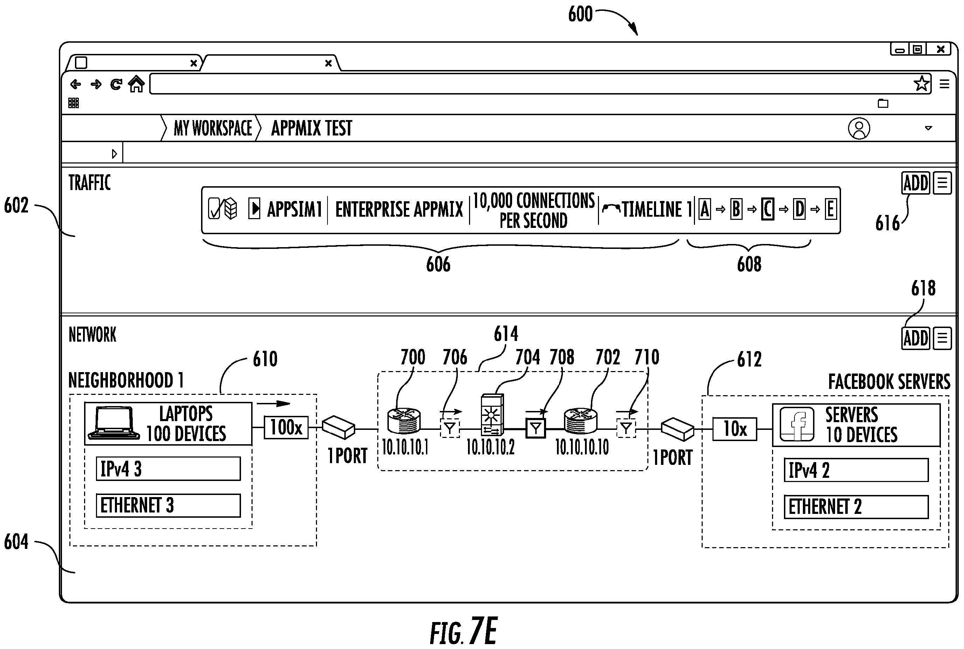

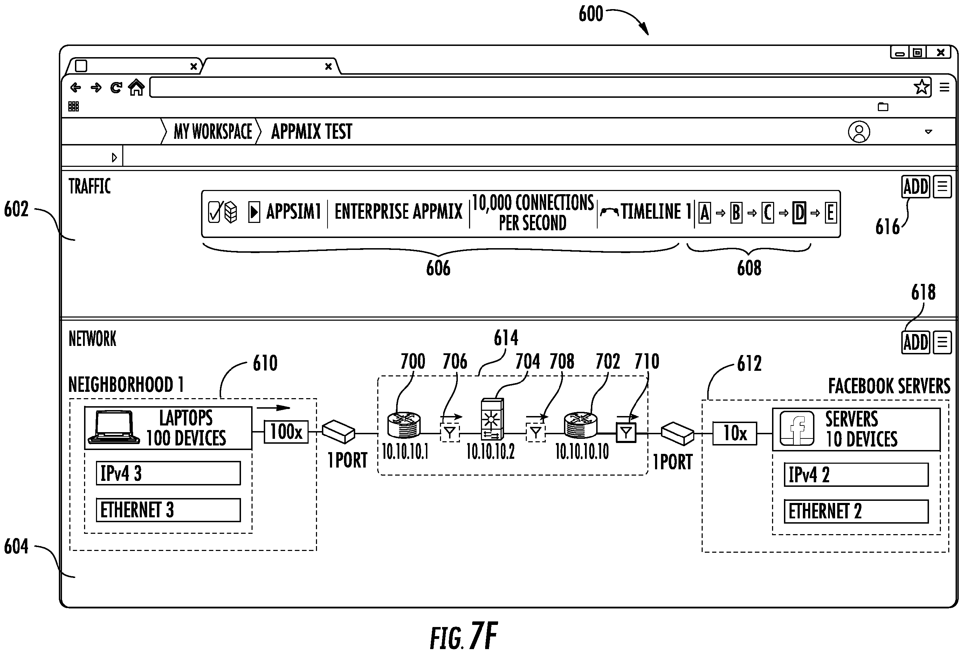

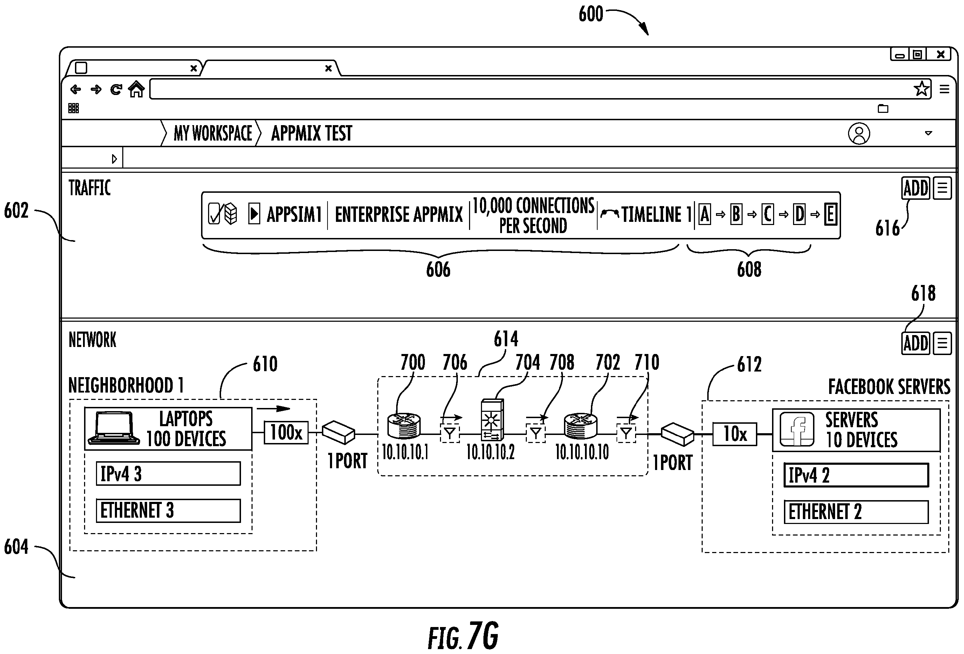

Figures 7C-7G illustrate the specification of the traffic source, the traffic destination, and waypoints between the traffic source and destination. Defining a node as a source, destination, or waypoint may include selecting the corresponding letter (A, B,C, D, or E) in traffic definition portion **602** and then selecting the corresponding node in control plane definition and display portion **604** In Figure 7C, the user selects the traffic source as laptops **610.** In Figure 7D, the user selects the first waypoint, i.e., the first place where traffic is expected as network tap **706.** In Figure 7E, the user selects the next waypoint where traffic is expected, which is network tap **708.** In Figure 7F, the user selects the next waypoint where traffic is expected, which in this example is network tap **710.** In Figure 7G, the user selects the traffic destination, which in this example is Facebook servers **612.**

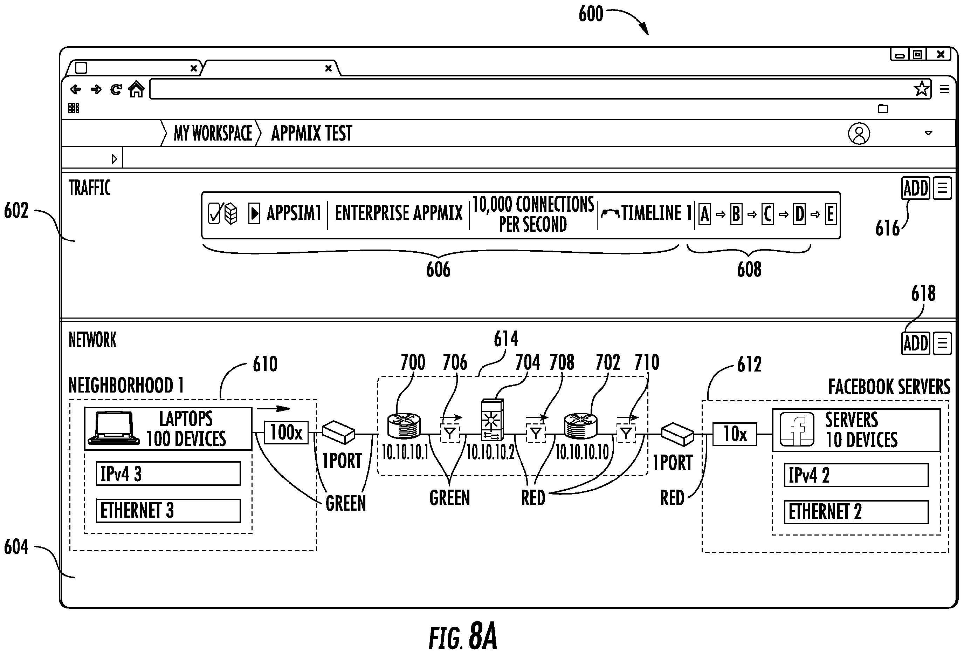

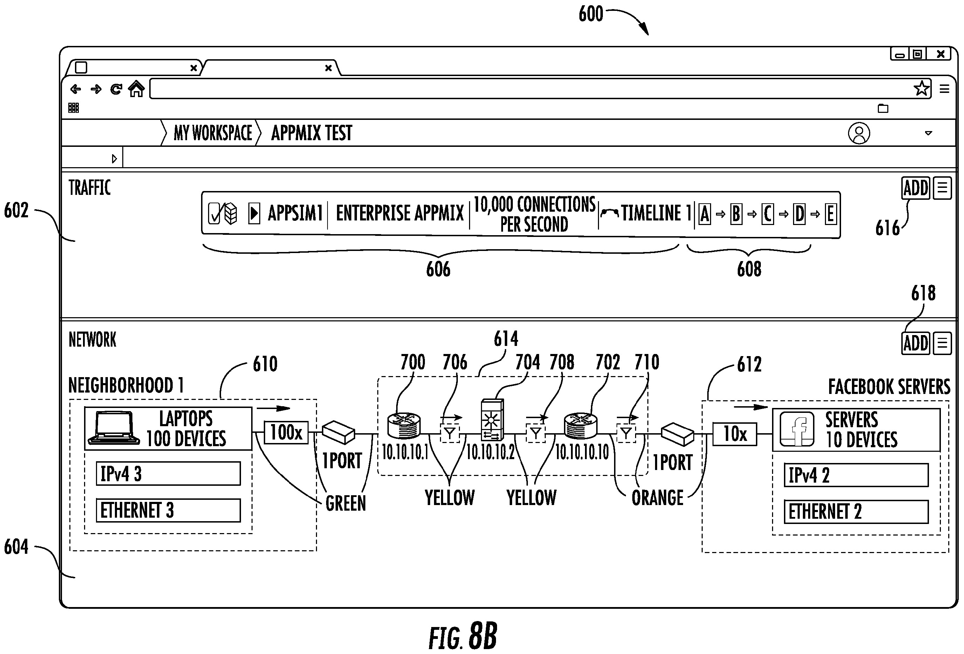

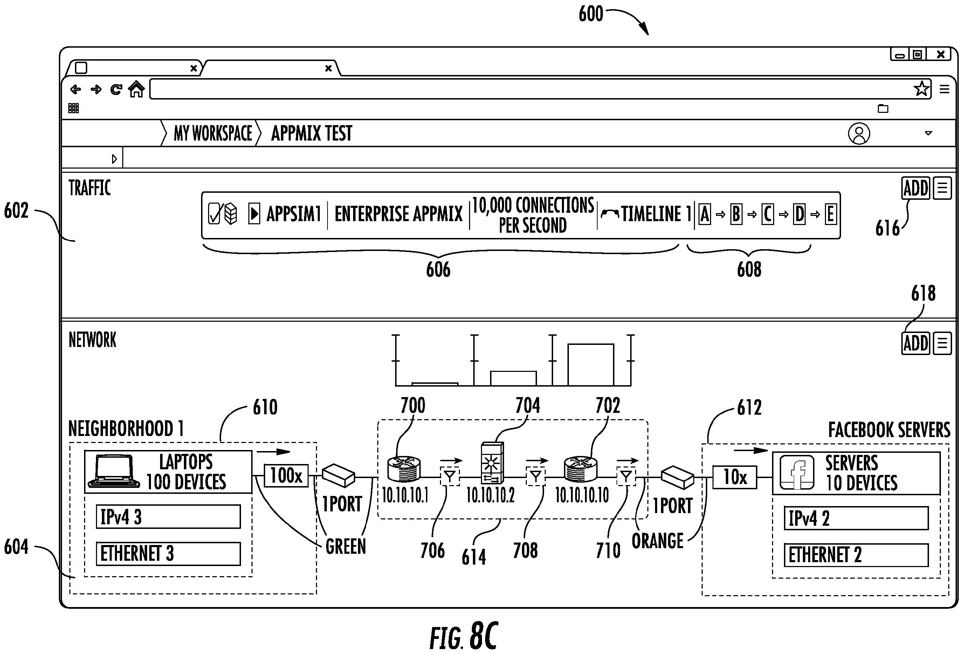

Figures 8A-8C illustrate exemplary user interfaces that may be presented to the user while a test is running. In Figure 8A, traffic is running from the traffic source to the traffic destination. The links may be displayed in different colors to indicate different conditions. These colors are indicated by the words "RED", "GREEN", "ORANGE" and "YELLOW" in Figures 8A-8C to obviate the need for color drawings. The green links between nodes indicate traffic running at an expected rate. The red links between the nodes indicate increased latency or packet loss. In the illustrated example, the green links on one side of router **704** and the red links on the other side of router **704** indicate a problem with router **704.** In Figure 8B, the links are displayed with different colors to indicate relative packet loss or latency between network nodes. For example, yellow, orange, and red may indicate relative degrees of packet latency in the network. Figure 8C illustrates an alternate mechanism for displaying latency where a graph is displayed above each link indicating the relative packet latency of the links. In one embodiment, each segment of each link may be displayed in a different color according to its relative latency, packet loss, throughput, jitter, or other performance metric.

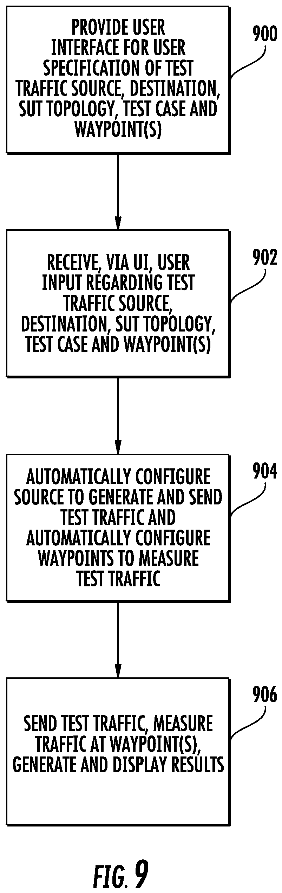

Figure 9 is a flow chart illustrating an exemplary process for providing user interfaces for specification of system under test and network tap topology and for presenting topology specific test results according to an embodiment of the subject matter described herein. Referring to Figure 9, in step **900,** a user interface is provided for user specification of a test traffic source, a test traffic destination, a test case, SUT topology, and at least one waypoint in the SUT for measuring test traffic. The user interface may be any of those interfaces illustrated in Figures 6A-7G. In step **902,** the method includes receiving, via the user interface, user input regarding the test traffic source, the test traffic destination, the test case, the SUT topology, and the at least one waypoint. For example, using interface **600** illustrated in Figure 6A, the user may define the traffic type, the traffic source, and the traffic destination. The use may further specify the SUT topology using the interface illustrated in Figures 7A-7G.

In step **904,** in response to the user input, the test traffic source is automatically configured to generate the test traffic and send the test traffic to the traffic destination via the system under test and the waypoints are automatically configured to measure the test traffic. Automatically configuring the test traffic source to transmit the traffic may include configuring a packet generator with the type and volume of traffic to be sent. Automatically configuring the waypoints to measure the traffic may include programming the waypoints to look for the specific traffic type that is of interest to the user by specifying information, such as packet group identifiers (PGIDs) that are of interest. In step **906,** the test traffic is generated and sent from the traffic source to the traffic destination via the at least one waypoint and the SUT, the traffic is measured at the at least one waypoint, and measurements of the traffic mapped to different regions of a displayed topology map of the system under test is output. Measuring and outputting the results may include capturing the traffic that is of interest at the waypoints and presenting results that are mapped to the SUT topology, such as packet loss or latency mapped to links or DUTs, as illustrated in Figures 8A-8C.

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A method for specifying and utilizing a test traffic source, a test traffic destination, system under test "SUT" topology, and waypoints located at different regions within the SUT topology for measuring test traffic, the method comprising:
at a network equipment test device (100):
providing a user interface (600) for user specification of a test traffic source, a test traffic destination, a test case (104), an SUT topology, and a plurality of waypoints for measuring test traffic, wherein providing a user interface (600) includes providing a graphical user interface that displays network devices that make up the SUT topology and a plurality of network taps (706, 708, 710) that tap network traffic at different waypoints between the network devices that make up the SUT topology;
receiving, via the user interface (600), user input regarding the test traffic source, the test traffic destination, the test case (104), the SUT topology, and the waypoints; and
in response to the user input, automatically configuring the test traffic source to generate the test traffic and send the test traffic to the test traffic destination via the SUT (101, 614), and automatically configuring the network taps (706, 708, 710) located at the waypoints to measure the test traffic;
generating and sending test traffic from the test traffic source to the test traffic destination via the SUT (101, 614) and the waypoints;
measuring traffic in the different regions of the SUT topology using the network taps (706, 708, 710) located at the waypoints; and
outputting, on a topology map of the SUT (101, 614), an indication of the measured traffic mapped to the different regions of the displayed topology map of the SUT (101, 614).

2. The method of claim 1 wherein providing a user interface (600) includes providing a user interface (600) having a traffic definition portion (602) which provides for user specification of a traffic type, a traffic rate, and a traffic timeline indicating a time for reaching the traffic rate.

3. The method of claim 2 wherein the traffic definition portion (602) provides for user selection of nodes to be defined as the test traffic source, the test traffic destination, and the waypoints.

4. The method of claim 2 wherein providing a user interface (600) includes providing a user interface (600) having a control plane definition and display portion (604) that provides for graphical display of the test traffic source, the test traffic destination, the SUT topology, and the waypoints within the SUT topology to be selected for one of the nodes in the traffic definition portion (602).

5. The method of claim 1 wherein outputting measurements of the traffic on the topology map includes outputting packet loss data mapped to specific links or DUTs (200, 202, 204, 206, 208, 210, 212) on the topology map.

6. The method of claim 1 wherein outputting the measurements mapped to different regions of the topology map includes outputting packet latency data mapped to different links or DUTs (200, 202, 204, 206, 208, 210, 212) on the topology map.

7. The method of claim 1 wherein outputting the measurements mapped to different regions of the displayed topology map includes displaying a graph of relative measurements associated with different links or DUTs (200, 202, 204, 206, 208, 210, 212) on the topology map.

8. A system for specifying and utilizing a test traffic source, a test traffic destination, and system under test "SUT" (101, 614) and waypoints located within the SUT topology for measuring test traffic, the system comprising:
a network equipment test device (100) including:
a SUT topology specifier (102) configured to provide user specification of a test traffic source, a test traffic destination, a test case (104), an SUT topology, and a plurality of waypoints within the SUT topology for measuring test traffic, wherein the SUT topology specifier (102) includes a graphical user interface (600) that displays network devices that make up the SUT topology and a plurality of network taps (706, 708, 710) that tap network traffic at different waypoints between the network devices that make up the SUT topology, the SUT topology specifier (102) for automatically configuring the test traffic source to generate test traffic and send the test traffic to the system under test (101, 614), and for automatically configuring the network taps (706, 708, 710) located at the waypoints to measure the test traffic,;
a test packet generator (103) configured to function as the test traffic source by generating and transmitting the test packets to the test traffic destination via the SUT (101, 614) and the waypoints; and
a traffic measurements processor (108) configured to process traffic measurements generated by the network taps (706, 708, 710) located at the waypoints and for outputting, on a topology map of the system under test (101, 614), an indication of the traffic measurements mapped to the different regions of the displayed topology map of the system under test (101, 614).

9. The system of claim 8 wherein the user interface (600) includes a traffic definition portion (602) which provides for user specification of a traffic type, a traffic rate, and a traffic timeline indicating a time for reaching a traffic rate.

10. The system of claim 9 wherein the traffic definition portion (602) provides for user selection of nodes to be defined as the test traffic source, the test traffic destination, or one of the waypoints.

11. The system of claim 8 wherein the user interface (600) includes a control plane definition and display portion (604) that provides for graphical display of the SUT topology and the test traffic source, the test traffic destination, and the waypoints to be selected for one of the nodes in the traffic definition portion (602).

12. The system of claim 8 wherein traffic measurements processor (108) is configured to output packet loss data mapped to specific links or DUTs (200, 202, 204, 206, 208, 210, 212) on the topology map.

13. The system of claim 8 wherein the traffic measurements processor (108) is configured to output packet latency data mapped to different links or DUTs (200, 202, 204, 206, 208, 210, 212) on the topology map.

14. The system of claim 8 wherein the traffic measurements processor (108) is configured to display a graph of relative traffic measurements associated with different links or DUTs (200, 202, 204, 206, 208, 210, 212) on the topology map.

15. A non-transitory computer readable medium having stored thereon executable instructions that when executed by the processor of a computer control the computer to perform steps comprising:
providing a user interface (600) for user specification of a test traffic source, a test traffic destination, a test case (104), an SUT topology, and a plurality of waypoints within the SUT topology for measuring test traffic at different regions within the SUT topology, wherein providing a user interface (600) includes providing a graphical user interface (600) that displays network devices that make up the SUT topology and a plurality of network taps (706, 708, 710) that tap network traffic at different waypoints between the network devices that make up the SUT topology;
receiving, via the user interface (600), user input regarding the test traffic source, the test traffic destination, the test case (104), the SUT topology, and the waypoints; and
in response to the user input, automatically configuring the test traffic source to generate the test traffic and send the test traffic to the test traffic destination via the SUT (101, 614), and automatically configuring the network taps (706, 708, 710) located at the waypoints to measure the test traffic;
generating and sending test traffic from the test traffic source to the test traffic destination via the SUT (101, 614) and the waypoints;
measuring traffic at the waypoints; and
outputting, on a topology map of the SUT (101, 614), an indication of the measured traffic mapped to the different regions of the displayed topology map of the SUT (101, 614).

## Patentansprüche

1. Ein Verfahren zum Spezifizieren und Verwenden einer Testverkehrsquelle, eines Testverkehrsziels, einer System-Under-Test-Topologie, "SUT"-Topologie, und von Wegpunkten, die sich an unterschiedlichen Bereichen innerhalb der SUT-Topologie befinden, um Testverkehr zu messen, wobei das Verfahren Folgendes beinhaltet:
an einer Netzwerkgerättestvorrichtung (100):
Bereitstellen einer Benutzerschnittstelle (600) zur Benutzerspezifikation einer Testverkehrsquelle, eines Testverkehrsziels, eines Testfalls (104), einer SUT-Topologie und einer Vielzahl von Wegpunkten, um Testverkehr zu messen, wobei das Bereitstellen einer Benutzerschnittstelle (600) das Bereitstellen einer graphischen Benutzerschnittstelle umfasst, die Netzwerkvorrichtungen, welche die SUT-Topologie ausmachen, und eine Vielzahl von Netzwerkabgriffen (706, 708, 710), die an unterschiedlichen Wegpunkten zwischen den Netzwerkvorrichtungen, welche die SUT-Topologie ausmachen, Netzwerkverkehr abgreifen, anzeigt;
Empfangen, über die Benutzerschnittstelle (600), einer Benutzereingabe hinsichtlich der Testverkehrsquelle, des Testverkehrsziels, des Testfalls (104), der SUT-Topologie und der Wegpunkte; und
als Reaktion auf die Benutzereingabe, automatisches Konfigurieren der Testverkehrsquelle zum Erzeugen des Testverkehrs und Senden des Testverkehrs an das Testverkehrsziel über das SUT (101, 614) und automatisches Konfigurieren der Netzwerkabgriffe (706, 708, 710), die sich an den Wegpunkten befinden, um den Testverkehr zu messen;
Erzeugen und Senden von Testverkehr von der Testverkehrsquelle an das Testverkehrsziel über das SUT (101, 614) und die Wegpunkte;
Messen von Verkehr in den verschiedenen Bereichen der SUT-Topologie unter Verwendung der Netzwerkabgriffe (706, 708, 710), die sich an den Wegpunkten befinden; und
Ausgeben, auf einer Topologiekarte des SUT (101, 614), einer Angabe des gemessenen Verkehrs, der auf die unterschiedlichen Bereiche der angezeigten Topologiekarte des SUT (101, 614) abgebildet ist.

2. Verfahren gemäß Anspruch 1, wobei das Bereitstellen einer Benutzerschnittstelle (600) das Bereitstellen einer Benutzerschnittstelle (600) mit einem Verkehrsdefinitionsabschnitt (602) umfasst, der eine Benutzerspezifikation eines Verkehrstyps, einer Verkehrsrate und einer Verkehrszeitleiste, die eine Zeit zum Erreichen der Verkehrsrate angibt, bereitstellt.

3. Verfahren gemäß Anspruch 2, wobei der Verkehrsdefinitionsabschnitt (602) eine Benutzerauswahl von Knoten bereitstellt, die als die Testverkehrsquelle, das Testverkehrsziel und die Wegpunkte definiert werden sollen.

4. Verfahren gemäß Anspruch 2, wobei das Bereitstellen einer Benutzerschnittstelle (600) das Bereitstellen einer Benutzerschnittstelle (600) mit einem Steuerebenedefinitions- und -anzeigeabschnitt (604) umfasst, der eine graphische Anzeige der Testverkehrsquelle, des Testverkehrsziels, der SUT-Topologie und der Wegpunkte innerhalb der SUT-Topologie, die für einen der Knoten in dem Verkehrsdefinitionsabschnitt (602) ausgewählt werden sollen, bereitstellt.

5. Verfahren gemäß Anspruch 1, wobei das Ausgeben von Messungen des Verkehrs auf der Topologiekarte das Ausgeben von Paketverlustdaten, die auf bestimmte Verbindungen oder DUTs (200, 202, 204, 206, 208, 210, 212) auf der Topologiekarte abgebildet sind, umfasst.

6. Verfahren gemäß Anspruch 1, wobei das Ausgeben der Messungen, die auf unterschiedliche Bereiche der Topologiekarte abgebildet sind, das Ausgeben von Paketlatenzdaten, die auf unterschiedliche Verbindungen oder DUTs (200, 202, 204, 206, 208, 210, 212) auf der Topologiekarte abgebildet sind, umfasst.

7. Verfahren gemäß Anspruch 1, wobei das Ausgeben der Messungen, die auf unterschiedliche Bereiche der angezeigten Topologiekarte abgebildet sind, das Anzeigen eines Diagramms relativer Messungen, die mit unterschiedlichen Verbindungen oder DUTs (200, 202, 204, 206, 208, 210, 212) auf der Topologiekarte assoziiert sind, umfasst.

8. Ein System zum Spezifizieren und Verwenden einer Testverkehrsquelle, eines Testverkehrsziels und eines System UnderTest, "SUT", (101, 614) und von Wegpunkten, die sich innerhalb der SUT-Topologie befinden, um Testverkehr zu messen, wobei das System Folgendes beinhaltet:
eine Netzwerkgerättestvorrichtung (100), die Folgendes umfasst:
einen SUT-Topologiespezifikator (102), der konfiguriert ist zum Bereitstellen einer Benutzerspezifikation einer Testverkehrsquelle, eines Testverkehrsziels, eines Testfalls (104), einer SUT-Topologie und einer Vielzahl von Wegpunkten innerhalb der SUT-Topologie, um Testverkehr zu messen, wobei der SUT-Topologiespezifikator (102) eine graphische Benutzerschnittstelle (600) umfasst, die Netzwerkvorrichtungen, welche die SUT-Topologie ausmachen, und eine Vielzahl von Netzwerkabgriffen (706, 708, 710), die an unterschiedlichen Wegpunkten zwischen den Netzwerkvorrichtungen, welche die SUT-Topologie ausmachen, Netzwerkverkehr abgreifen, anzeigt, wobei der SUT-Topologiespezifikator (102) für Folgendes dient: zum automatischen Konfigurieren der Testverkehrsquelle zum Erzeugen des Testverkehrs und Senden des Testverkehrs an das System Under Test (101, 614) und zum automatischen Konfigurieren der Netzwerkabgriffe (706, 708, 710), die sich an den Wegpunkten befinden, um den Testverkehr zu messen;
einen Testpaketerzeuger (103), der konfiguriert ist, um als die Testverkehrsquelle zu fungieren, durch das Erzeugen und Übertragen der Testpakete an das Testverkehrsziel über das SUT (101, 614) und die Wegpunkte; und
einen Verkehrsmessungsprozessor (108), der konfiguriert ist, um Verkehrsmessungen, erzeugt durch die Netzwerkabgriffe (706, 708, 710), die sich an den Wegpunkten befinden, zu verarbeiten und um auf einer Topologiekarte des System Under Test (101, 614) eine Angabe der auf die unterschiedlichen Bereiche der angezeigten Topologiekarte des System Under Test (101, 614) abgebildeten Verkehrsmessungen auszugeben.

9. System gemäß Anspruch 8, wobei die Benutzerschnittstelle (600) einen Verkehrsdefinitionsabschnitt (602) umfasst, der eine Benutzerspezifikation eines Verkehrstyps, einer Verkehrsrate und einer Verkehrszeitleiste, die eine Zeit zum Erreichen einer Verkehrsrate angibt, bereitstellt.

10. System gemäß Anspruch 9, wobei der Verkehrsdefinitionsabschnitt (602) eine Benutzerauswahl von Knoten bereitstellt, die als die Testverkehrsquelle, das Testverkehrsziel oder einen der Wegpunkte definiert werden sollen.

11. System gemäß Anspruch 8, wobei die Benutzerschnittstelle (600) einen Steuerebenedefinitions- und -anzeigeabschnitt (604) umfasst, der eine graphische Anzeige der SUT-Topologie und der Testverkehrsquelle, des Testverkehrsziels und der Wegpunkte, die für einen der Knoten in dem Verkehrsdefinitionsabschnitt (602) ausgewählt werden sollen, bereitstellt.

12. System gemäß Anspruch 8, wobei der Verkehrsmessungsprozessor (108) konfiguriert ist, um Paketverlustdaten, die auf bestimmte Verbindungen oder DUTs (200, 202, 204, 206, 208, 210, 212) auf der Topologiekarte abgebildet sind, auszugeben.

13. System gemäß Anspruch 8, wobei der Verkehrsmessungsprozessor (108) konfiguriert ist, um Paketlatenzdaten, die auf unterschiedliche Verbindungen oder DUTs (200, 202, 204, 206, 208, 210, 212) auf der Topologiekarte abgebildet sind, auszugeben.

14. System gemäß Anspruch 8, wobei der Verkehrsmessungsprozessor (108) konfiguriert ist, um ein Diagramm relativer Verkehrsmessungen, die mit unterschiedlichen Verbindungen oder DUTs (200, 202, 204, 206, 208, 210, 212) auf der Topologiekarte assoziiert sind, anzuzeigen.

15. Ein nicht transitorisches computerlesbares Medium mit darauf gespeicherten ausführbaren Anweisungen, die, wenn sie von dem Prozessor eines Computers ausgeführt werden, den Computer steuern, um Schritte durchzuführen, die Folgendes beinhalten:
Bereitstellen einer Benutzerschnittstelle (600) zur Benutzerspezifikation einer Testverkehrsquelle, eines Testverkehrsziels, eines Testfalls (104), einer SUT-Topologie und einer Vielzahl von Wegpunkten innerhalb der SUT-Topologie, um Testverkehr an unterschiedlichen Bereichen innerhalb der SUT-Topologie zu messen,
wobei das Bereitstellen einer Benutzerschnittstelle (600) das Bereitstellen einer graphischen Benutzerschnittstelle (600) umfasst, die Netzwerkvorrichtungen, welche die SUT-Topologie ausmachen, und eine Vielzahl von Netzwerkabgriffen (706, 708, 710), die an unterschiedlichen Wegpunkten zwischen den Netzwerkvorrichtungen, welche die SUT-Topologie ausmachen, Netzwerkverkehr abgreifen, anzeigt;
Empfangen, über die Benutzerschnittstelle (600), einer Benutzereingabe hinsichtlich der Testverkehrsquelle, des Testverkehrsziels, des Testfalls (104), der SUT-Topologie und der Wegpunkte; und
als Reaktion auf die Benutzereingabe, automatisches Konfigurieren der Testverkehrsquelle zum Erzeugen des Testverkehrs und Senden des Testverkehrs an das Testverkehrsziel über das SUT (101, 614) und automatisches Konfigurieren der Netzwerkabgriffe (706, 708, 710), die sich an den Wegpunkten befinden, um den Testverkehr zu messen;
Erzeugen und Senden von Testverkehr von der Testverkehrsquelle an das Testverkehrsziel über das SUT (101, 614) und die Wegpunkte;
Messen von Verkehr an den Wegpunkten; und
Ausgeben, auf einer Topologiekarte des SUT (101, 614), einer Angabe des gemessenen Verkehrs, der auf die unterschiedlichen Bereiche der angezeigten Topologiekarte des SUT (101, 614) abgebildet ist

## Revendications

1. Une méthode pour spécifier et utiliser une source de trafic de test, une destination de trafic de test, une topologie de système sous test « SUT », et des points de passage situés au niveau de différentes régions à l'intérieur de la topologie de SUT pour mesurer du trafic de test, la méthode comprenant :
au niveau d'un dispositif de test d'équipement de réseau (100) :
la fourniture d'une interface utilisateur (600) pour la spécification par l'utilisateur d'une source de trafic de test, d'une destination de trafic de test, d'un scénario de test (104), d'une topologie de SUT, et d'une pluralité de points de passage pour mesurer du trafic de test, la fourniture d'une interface utilisateur (600) incluant la fourniture d'une interface utilisateur graphique qui affiche des dispositifs de réseau qui composent la topologie de SUT et une pluralité de prises de réseau (*network taps*) (706, 708, 710) qui prélèvent du trafic réseau au niveau de différents points de passage entre les dispositifs de réseau qui composent la topologie de SUT ;
la réception, par l'intermédiaire de l'interface utilisateur (600), d'une entrée utilisateur concernant la source de trafic de test, la destination de trafic de test, le scénario de test (104), la topologie de SUT et les points de passage ; et
en réponse à l'entrée utilisateur, la configuration automatique de la source de trafic de test pour générer le trafic de test et envoyer le trafic de test à la destination de trafic de test par l'intermédiaire du SUT (101, 614), et la configuration automatique des prises de réseau (706, 708, 710) situées au niveau des points de passage pour mesurer le trafic de test ;
la génération et l'envoi de trafic de test de la source de trafic de test à la destination de trafic de test par l'intermédiaire du SUT (101, 614) et des points de passage ;
la mesure de trafic dans les différentes régions de la topologie de SUT à l'aide des prises de réseau (706, 708, 710) situées au niveau des points de passage ; et
la production, sur une carte de topologie du SUT (101, 614), d'une indication du trafic mesuré mappé aux différentes régions de la carte de topologie affichée du SUT (101, 614).

2. La méthode de la revendication 1 dans laquelle la fourniture d'une interface utilisateur (600) inclut la fourniture d'une interface utilisateur (600) ayant une partie de définition de trafic (602) qui permet la spécification par l'utilisateur d'un type de trafic, d'un débit de trafic et d'une chronologie de trafic indiquant un temps pour atteindre le débit de trafic.

3. La méthode de la revendication 2 dans laquelle la partie de définition de trafic (602) permet la sélection par l'utilisateur de noeuds à définir comme source de trafic de test, comme destination de trafic de test et comme points de passage.

4. La méthode de la revendication 2 dans laquelle la fourniture d'une interface utilisateur (600) inclut la fourniture d'une interface utilisateur (600) ayant une partie de définition et d'affichage de plan de commande (604) qui permet l'affichage graphique de la source de trafic de test, de la destination de trafic de test, de la topologie de SUT et des points de passage à l'intérieur de la topologie de SUT à sélectionner pour l'un des noeuds dans la partie de définition de trafic (602).

5. La méthode de la revendication 1 dans laquelle la production de mesures du trafic sur la carte de topologie inclut la production de données de perte de paquets mappées à des liaisons ou à des DUT spécifiques (200, 202, 204, 206, 208, 210, 212) sur la carte de topologie.

6. La méthode de la revendication 1 dans laquelle la production des mesures mappées à différentes régions de la carte de topologie inclut la production de données de latence de paquet mappées à différentes liaisons ou à différents DUT (200, 202, 204, 206, 208, 210, 212) sur la carte de topologie.

7. La méthode de la revendication 1 dans laquelle la production des mesures mappées à différentes régions de la carte de topologie affichée inclut l'affichage d'un graphe de mesures relatives associées à différentes liaisons ou à différents DUT (200, 202, 204, 206, 208, 210, 212) sur la carte de topologie.

8. Un système pour spécifier et utiliser une source de trafic de test, une destination de trafic de test, et un système sous test « SUT » (101, 614) et des points de passage situés à l'intérieur de la topologie de SUT pour mesurer du trafic de test, le système comprenant :
un dispositif de test d'équipement de réseau (100) incluant :
un spécificateur de topologie de SUT (102) configuré pour fournir une spécification par l'utilisateur d'une source de trafic de test, d'une destination de trafic de test, d'un scénario de test (104), d'une topologie de SUT, et d'une pluralité de points de passage à l'intérieur de la topologie de SUT pour mesurer du trafic de test, le spécificateur de topologie de SUT (102) incluant une interface utilisateur graphique (600) qui affiche des dispositifs de réseau qui composent la topologie de SUT et une pluralité de prises de réseau (706, 708, 710) qui prélèvent du trafic réseau au niveau de différents points de passage entre les dispositifs de réseau qui composent la topologie de SUT, le spécificateur de topologie de SUT (102) servant à configurer automatiquement la source de trafic de test pour générer du trafic de test et envoyer le trafic de test au système sous test (101, 614), et à configurer automatiquement les prises de réseau (706, 708, 710) situées au niveau des points de passage pour mesurer le trafic de test ;
un générateur de paquets de test (103) configuré pour faire fonction de source de trafic de test par génération et transmission des paquets de test à la destination de trafic de test par l'intermédiaire du SUT (101, 614) et des points de passage ; et
un processeur de mesures de trafic (108) configuré pour traiter des mesures de trafic générées par les prises de réseau (706, 708, 710) situées au niveau des points de passage et pour produire, sur une carte de topologie du système sous test (101, 614), une indication des mesures de trafic mappées aux différentes régions de la carte de topologie affichée du système sous test (101, 614).

9. Le système de la revendication 8 dans lequel l'interface utilisateur (600) inclut une partie de définition de trafic (602) qui permet la spécification par l'utilisateur d'un type de trafic, d'un débit de trafic et d'une chronologie de trafic indiquant un temps pour atteindre un débit de trafic.

10. Le système de la revendication 9 dans lequel la partie de définition de trafic (602) permet la sélection par l'utilisateur de noeuds à définir comme source de trafic de test, comme destination de trafic de test, ou comme l'un des points de passage.

11. Le système de la revendication 8 dans lequel l'interface utilisateur (600) inclut une partie de définition et d'affichage de plan de commande (604) qui permet l'affichage graphique de la topologie de SUT et de la source de trafic de test, de la destination de trafic de test et des points de passage à sélectionner pour l'un des noeuds dans la partie de définition de trafic (602).

12. Le système de la revendication 8 dans lequel le processeur de mesures de trafic (108) est configuré pour produire des données de perte de paquets mappées à des liaisons ou à des DUT spécifiques (200, 202, 204, 206, 208, 210, 212) sur la carte de topologie.

13. Le système de la revendication 8 dans lequel le processeur de mesures de trafic (108) est configuré pour produire des données de latence de paquet mappées à différentes liaisons ou à différents DUT (200, 202, 204, 206, 208, 210, 212) sur la carte de topologie.

14. Le système de la revendication 8 dans lequel le processeur de mesures de trafic (108) est configuré pour afficher un graphe de mesures de trafic relatives associées à différentes liaisons ou à différents DUT (200, 202, 204, 206, 208, 210, 212) sur la carte de topologie.

15. Un support non transitoire lisible par ordinateur sur lequel sont stockées des instructions exécutables qui, lorsqu'elles sont exécutées par le processeur d'un ordinateur, commandent l'ordinateur pour effectuer des étapes comprenant :
la fourniture d'une interface utilisateur (600) pour la spécification par l'utilisateur d'une source de trafic de test, d'une destination de trafic de test, d'un scénario de test (104), d'une topologie de SUT, et d'une pluralité de points de passage à l'intérieur de la topologie de SUT pour mesurer du trafic de test au niveau de différentes régions à l'intérieur de la topologie de SUT, la fourniture d'une interface utilisateur (600) incluant la fourniture d'une interface utilisateur graphique (600) qui affiche des dispositifs de réseau qui composent la topologie de SUT et une pluralité de prises de réseau (706, 708, 710) qui prélèvent du trafic réseau au niveau de différents points de passage entre les dispositifs de réseau qui composent la topologie de SUT ;
la réception, par l'intermédiaire de l'interface utilisateur (600), d'une entrée utilisateur concernant la source de trafic de test, la destination de trafic de test, le scénario de test (104), la topologie de SUT et les points de passage ; et
en réponse à l'entrée utilisateur, la configuration automatique de la source de trafic de test pour générer le trafic de test et envoyer le trafic de test à la destination de trafic de test par l'intermédiaire du SUT (101, 614), et la configuration automatique des prises de réseau (706, 708, 710) situées au niveau des points de passage pour mesurer le trafic de test ;
la génération et l'envoi de trafic de test de la source de trafic de test à la destination de trafic de test par l'intermédiaire du SUT (101, 614) et des points de passage ;
la mesure de trafic au niveau des points de passage ; et
la production, sur une carte de topologie du SUT (101, 614), d'une indication du trafic mesuré mappé aux différentes régions de la carte de topologie affichée du SUT (101, 614).
